# EUROPEAN PATENT APPLICATION

(11) **EP 2 434 145 A1**
(43) Date of publication of application: **28.03.2012**
(21) Application number: 11750220.3
(22) Date of filing: 15.02.2011
(51) Int. Cl.: F03D 3/06

(54) **VERTICAL-AXIS WIND ROTOR**

(30) Priority: 02.03.2010 ES 201000283
(71) Applicant: Geolica Innovations, S.L., 26007-Logroño (La Ruija) (ES)
(72) Inventor: EGUIZABAL, Juan Jose, 26007 Logroño La Rioja (ES)
(74) Representative: Villamor Muguerza, Jon
(86) International application number: PCT/ES2011/000038
(87) International publication number: WO 2011/107631

(57) **Abstract**

This present invention relates to a wind rotor with a vertical shaft, formed by means of a vertical shaft (1), two horizontal end supports (3, 3') and a plurality of blades (4, 4') arranged between said supports. The features of the invention are centered on the fact that the blades (4, 4') are of two types, in an alternating arrangement, blades (4) prepared and configured for forming drag elements and blades (4') prepared for forming lift elements, with the additional particularity that the latter stall when they exceed a pre-established wind speed, causing a braking effect in the rotor.

This structure eliminates many of the drawbacks of the known wind rotors with a vertical shaft, such that it does not require an important starting torque, a braking system with strong winds, or the orientation and reorientation with respect to the dominant winds. Nor is it limited to being used with laminar winds, and it does not require being arranged at great heights, being able to be installed on a short support post (2) in optimal operating conditions.

## Description

### Object of the Invention

The present invention relates to a wind rotor with a vertical shaft, permanently oriented against the wind, intended to form part of a wind turbine.

The object of the invention is to provide a wind rotor with a vertical shaft which, by means of the combination of two types of blades conferring to it a low starting torque and auto-regulated turns, does not need conventional brakes, is adapted for gusty, swirling, directional, and upward winds, etc., and always exploiting the wind to the maximum regardless of its direction and strength.

The invention is thus in the scope of renewable energies, and more specifically in the scope of machinery for exploiting wind energy.

### Background of the Invention

Different types of wind turbines, the operation of which is due to the exploitation of either drag forces or lift forces, such as for example the Darrieus model and the large wind generators with a horizontal shaft which mainly use the lift force of their aerodynamic profile in their operation, when the leading edge of the profile faces the direction of the wind, in a way similar to that of planes are known, while on the other hand there is the Savonius model, which mainly uses drag forces, concave surfaces facing the direction of the wind.

There are known wind rotors with a horizontal shaft which present a number of problems and drawbacks, such as the need of a mechanical brake for regulating and stopping the rotor, as well as the need of having to stop them when the winds are turbulent, hurricane-like, because if they are not stopped, breakage thereof can occur, since they offer great resistance due to their horizontal position.

Furthermore, the vibration of rotors with a horizontal is very noticeable as well as the generation of a loud noise during their operation, being polluting elements, on the other hand, for birds, as they do not easily detect them due to the horizontal arrangement.

Different rotor systems are known for the configuration of wind turbines as the main component for capturing wind energy, particularly wind turbines with a vertical shaft, all of them having poor energy output; one part directly faces the wind, independently of its nature, and not needing orientation; the other part is hidden from the wind, whereby producing no energy.

The mentioned wind rotors can be observed in documents: ES1002396; ES1049887; ES1070534; ES2028718; ES2237268; ES2267837; GB189915505; US4115032; US4650403; RU2096259; RU2135824; EP0679805; US4970404; among others.

These rotors present a problem which is fundamentally centered on the following aspects:
- They require a high starting torque,
- They require a braking system in the presence of strong winds.
- They require the orientation or disorientation with respect to dominant winds.

They require only the use of laminar winds.
- They require being arranged at great heights.
- For them to be profitable in practice, they must be very large machines.

### Description of the Invention

The wind rotor proposed by the invention satisfactorily solves the previously mentioned problems for each and every one of the different aspects discussed.

Said rotor is configured based on a vertical rotation shaft, to which two supports included in respective and imaginary parallel planes are orthogonally coupled, perpendicular to said shaft and located at the ends thereof, these supports being carriers of respective aerodynamic profiles, hereinafter referred to as blades.

According to the invention, the rotor starts from a theoretical aerodynamic profile, such as a "main profile", an asymmetric profile of concave convex configuration and with a section optimized so that when it is under the action of the wind, pressure differences originate between the surfaces of the blade, creating a great lift force and a great liftability, as well as considerable stall.

With this main profile and according to the essential nature of the invention, by means of two different types of vertical projection, two different blades are obtained, hereinafter referred to as alpha and beta.
- Both blades work simultaneously under lift and drag, regardless of the position that they occupy in the rotor and of the angle of attack of the predominant fluid.
- These profiles are inclined, i.e., their ends are rotationally offset between the lower and upper support bases, and vertically towards the rotational direction of the rotor, whereby obtaining a greater favorable contact time of the blade with the fluid, eliminating the skipping when the action of the fluid passes from a blade to the space between them and to another blade; the so-called "leaping" are eliminated, thus performing a much more regular, continuous operation and a smoother start, needing less energy for initiating the movement.
- The chord of both wing-like profiles decreases as their vertical projection advances by approximately, but not limited to, 5%; this confers to the circulating fluid in the concave part a spoon effect which leads to a Venturi effect, and accelerates the fluid therein, the fluid tending to leave more rapidly.
- As its vertical projection goes upwards, together with all the aforementioned, as has been said the chord of the profile decreases, and furthermore the section becomes twisted, maintaining the basic characteristics of the main profile, whereby the angle which the section advances, in the direction of the rotation of the rotor, is not that which the angle of attack advances, but it is minimized in a counter-rotation performed by the chord itself in its twisting in an opposite direction, whereby leaving it exposed for a greater space and time period to better fluid optimizing conditions.
- The final configuration and shape of each blade or wing-like profile is the result, in each case, of the foregoing integrated with the fact that the torsional moment generated in each infinitesimal section must be constant; and therefore internal stresses and strains are not generated in the mentioned wing-like profiles, and thus the entire profile works in identical conditions.
- To that end, in the vertical projection thereof, the leading edge has a progressive displacement of the profiles, inwards and outwards from the rotor, following a smooth curve, such that the upper edge of the blade is at a shorter distance from the center of the shaft of the rotor than the lower edge thereof, for compensating moments.

These are the general conditions which characterize both blades, and in the same manner.

In addition, each type of blade has another feature making them different from each other:
- the alpha blade is prepared for obtaining the maximum performance from the drag forces.
- and the other blade, the beta blade, is prepared for obtaining the maximum performance from the fluid lift forces.

There is an equal number of alpha and beta blades in the rotor and they are alternately arranged.

The alpha blades work as drag profiles and the beta blades as lift profiles, stalling when the speed of the wind exceeds a pre-established value, acting as a brake for the rotor.

### Description of the Drawings

To complement the description being made and for the purpose of aiding to better understand the features of the invention according to a preferred practical embodiment thereof, a set of drawings is attached as an integral part of said description, in which the following has been depicted with an illustrative and non-limiting character
Figure 1 shows a schematic perspective view of a wind rotor with a vertical shaft made according to the object of the present invention, on its corresponding support post.
Figure 2 shows a side elevational view of the rotor of the previous figure.
Figure 3 shows a cross-section view of a detail of the rotor through the plane of section A-A of Figure 2 Figure 4 shows a schematic depiction of the alpha blade.
Figure 5 shows a depiction similar to that of Figure 4 but this drawing corresponding to the beta blade.
Figure 6 shows a section of the main profile.

### Preferred Embodiment of the Invention

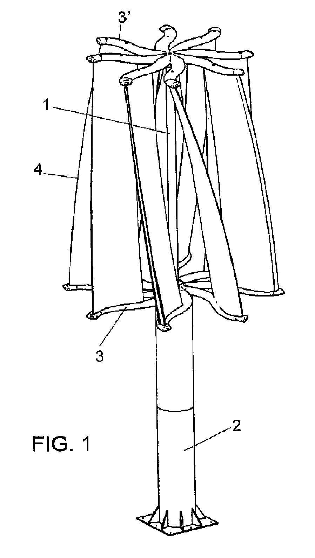

It can be observed from the figures described that the proposed rotor is formed from a shaft (1) located at the upper end of a support post (2), which post does not require having considerable height, as can be seen from observing Figure 1.

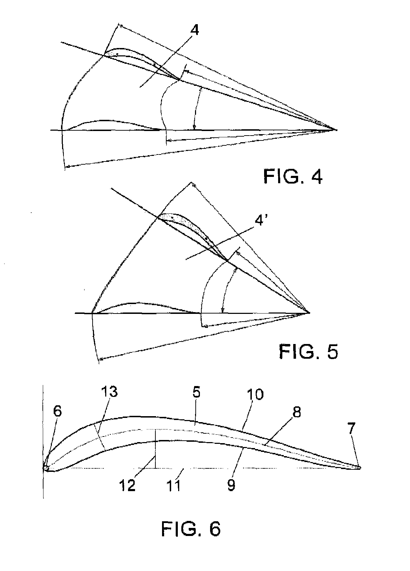

Respective supports (3, 3') are integral to the ends of the shaft, each of which supports is formed by a plurality of arms emerging from a common core, being co-planar, describing an arched trajectory in their distal portion, and being parallel to one other and perpendicular to the shaft (1), said arms (3) having equiangular spacing on respective supports, the arms of the upper support (3') being shorter and having a curvature suitable to that of the blades (4) which must be arranged between the lower support (3) and the upper support (3'), which blades, as mentioned previously, are from a main aerodynamic profile (5), shown in Figure 6, in which figure reference number (6) corresponds to the leading edge, reference number (7) corresponds to the trailing edge, reference number (8) corresponds to the mid-line of the aerodynamic profile, reference numbers (9 and 10) correspond to the intrados and extrados, reference number (11) corresponds to the chord; reference number (12) corresponds to the sag and reference number (13) corresponds to the maximum thickness.

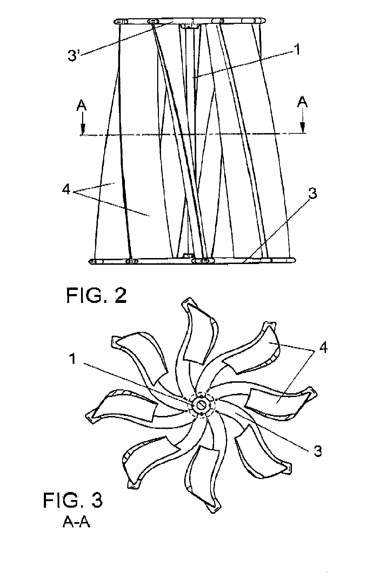

More specifically and as mentioned above, the number of blades (4) participating in the rotor must be even, and there are two types of blades based on the main aerodynamic profile (5), referred to as alpha and beta, that are especially shown in Figures 4 and 5, reference number (4) being maintained for the alpha profile, whereas the profile beta has reference number (4'), the blades (4, 4') of both types being alternately arranged about the shaft (1), as shown in Figures 1 to 3.

The main profile (5) has a thickness (13) in the order of 11% of the value of the chord (11), the radius of curvature is in the order of 13% also with respect to the length of the chord, the angle of the leading edge (6) is in the order of 8 degrees, its lower flatness 25%, the radius of the leading edge is in the order of 4.5 %, the maximum lift coefficient is in the order of 2.5, the maximum angle of said coefficient is in the order of 12.5 degrees, the maximum drag coefficient is in the order of 11.2 and the maximum angle of said coefficient is 104 degrees.

As has also been mentioned above, the alpha blade (4) and beta blade (4') are inclined, i.e., rotationally offset at their ends, their chord also decreases in both cases in an upward direction and its section progressively becomes twisted, having at its leading edge (6) a progressive displacement inwards and outwards from the rotor, which follows a smooth curve.

The alpha profile (4) is configured so that it works under the greatest passable drag for the purpose of maintaining the movement, making the rotor turn easily, such that the profile completely maximizes the surface oriented against the wind and contributes to the formation of an air pocket, as a result of the "spoon" effect in its drag position.

Since it is under the action of a flow, it behaves due to its own configuration as a lift element, but mainly as a thrust or drag element which tends to make the rotor or the assembly of blades rotate easily.

To that end, as the chord thereof decreases in its vertical projection, the section progressively becomes offset in favor of the rotation, there being a gradual opening between both supports (3, 3') between the base and the upper edge of the blade until reaching a rotational offset of 28° in favor of the rotation, which is what the blade is inclined, and at the same time the chord twists the profile 9° in the opposite direction, finally resulting in a variation of the chord of 19° in favor of the rotation, or in other words, in the 28° that the rotor rotates, it gains 9°.

This involves partially reorienting the blade to the orientation of the fluid as its profile rotates, whereby the blade is under drag for a longer space-time, whereby facilitating the start, and therefore reducing the minimum wind requirements for operation.

In turn, the beta profile (4') is prepared to work under the greatest possible lift for the purpose of increasing the rotation revolutions of the rotor and maintaining the rotational inertia.

Since said profile is under the action of a flow, it behaves due to its configuration as a thrust element, but mainly as a lift element, transmitting speed to the system and stalling if the maximum speeds allowed are exceeded, taking into account the lift coefficient, in which case it will lose said lift and brake the system

To that end, as its chord (11) decreases in its vertical projection, the section progressively becomes offset in favor of the rotation, there being a gradual opening between both supports (3, 3') between the base and the edge upper of the blade until reaching a rotational offset of 37° in favor of the rotation, which is what the blade is inclined, while at the same time the chord twists the profile 3° in the opposite direction, finally resulting in a variation of the chord of 34° in favor of the rotation, or in other words, in the 37° that the rotor rotates, it gains 3°.

This involves partially reorienting the profile to the orientation of the fluid as its profile rotates, whereby said blade is under lift for a longer space-time, and whereby the speed increases, maintaining the inertia of the system, but braking it if the maximum speed is exceeded, stalling and therefore automatically limiting the maximum wind requirements for operation.

It thus constitutes the speed stabilizer of the rotor because the system slows down as its revolutions increase, until finally closing down.

The mentioned lift blade (4') behave as an element which stalls if the maximum speeds allowed are exceeded, taking into account the lift coefficient, establishing braking means and speed stabilizing means for the rotor itself.

The blades (4, 4') are susceptible to variation if, due to the low prevailing winds in the area, in is necessary to increase the angles or the twists of the alpha blades to improve the start, sacrificing the revolutions of the beta blades by reducing the angles and twists thereof, if necessary.

The mentioned blades are uniformly distributed at the lower base of the rotor (2) with their angle of attack outwards, and the chord which is delayed in rotation with respect to the radius of the center to the leading edge in a portion equal to the maximum angle of the lift coefficient of the main profile, whereby being positioned at their maximum lift, in relation to the center of the rotor the angle of attack being in the same direction as the mentioned radius.

One alpha blade and one beta blade are provided alternately, and so on and so forth, and radially and equidistantly at the lower base.

These blades also exploit on their surfaces the turbulent winds produced at the tips of the other blades once the fluid has entered the center of the rotor and wishes to leave or escape, again producing work, and they maintain the aerodynamic lift of the assembly in the same manner.

A number of blades with a diameter and height which will be determined by the specific value of the surface facing the wind, such as the torque, r.p.m. and the corresponding scaling, necessary for obtaining the desired power will be involved in the rotor.

Depending on the speed of the dominant wind, the stalling moment is determined, resulting in an autoregulation of the rotational speed of the rotor itself, not having to brake it in extreme wind conditions because it chokes and stalls.

Constructively, it is integrated in a preferred but non-limiting manner in a body formed by a series of helical-shaped blades which configure a conical frustum with a curvilinear generatrix, which limits and characterizes it.

These helical features of the blades allow the leading edges to face the wind continuously acting on it as the system rotates.

The trailing edge (7) of the profile of the blade, according to its position in reference to the direction of the fluid, drives the flow into the empty space of the rotor contrary to the rotation thereof so that it can be picked up by the trailing edge of the profile of the opposite blade, and this again generating movement in favor of the rotation, thereof.

The conical shape limits the fluid compression capabilities, generating a blockage for the exit thereof (air), producing a loss in wind energy capturing and braking the system. It provokes a decompensation in the lift of the blades.

With winds that are considered excessive or dangerous, it enters a gain state versus stalling, known as "leaping" or choke, atmospheric vacuum which occurs when the air does not leave freely, this situation will occur at a determined speed, which is when the lift is exceeded, and it brakes itself rather than using the conventional mechanical brake.

The position of the leading edge of both blades on the lower part is fixed and adjustable in the trailing edge. At the upper end of the blade, both parts are moveable for their regulation according to the different wind intensities, thus capable of regulating the speed and the performance of the system.

The result is that this rotor is always oriented against the wind and there is no need to brake it even in extreme circumstances.

The system provides better wind performance advantages than current systems in light, gusty and turbulent winds as well as in storm or hurricane winds (it being understood that in these circumstances, the elements that can be found in the environment may not cause damage to the rotor).

A11 this is performed in its maximum simplicity in a simple, compact, economical and naintenance-free manner.

## Claims

1. A wind rotor with a vertical shaft, of the type which incorporate a pair of supports suitably fixed at the ends of the shaft thereof, which supports form the support means for a plurality of blades aligned circumferentially about the shaft, **characterized in that** there are two types of blades (4, 4') with an identical or similar main aerodynamic profile, vertically projected with advanced rotational displacement and twisted and with a shortened chord in the opposite direction, one blade (4) configured for drag and another blade (4') configured for lift, the cords (11) of said blades being oriented at an angle, radially, uniformly, concentrically and vertically at the base of the rotor, with the leading edge (6) outwards, alternately and equidistantly arranged at the lower base thereof.

2. The wind rotor with a vertical shaft according to claim 1, **characterized in that** each of the supports (3, 3') for the blades (4, 4') are materialized in a plurality of radial arms with a sinuous trajectory, having an equiangular distribution, with a curvature at the distal portion thereof coinciding with the curvature of the corresponding blade (4, 4').

3. The wind rotor with a vertical shaft according to the previous claims, **characterized in that** the lift blades (4') are configured such that the rotor stalls if the maximum speeds allowed are exceeded, with the consequent braking effect.

4. The wind rotor with a vertical shaft according to the previous claims, **characterized in that** the blades (4, 4') are inclined, rotationally offset at their ends between the lower and upper supports (3, 3'), and vertically towards the rotational direction of the rotor.

5. The wind rotor with a vertical shaft according to the previous claims, **characterized in that** the value of the chord (11) of the profiles of the blades (4, 4') decreases as the vertical projection thereof advances, while at the same time the section becomes twisted, such that the angle which the section advances, in the rotational direction of the rotor, is different from that which the angle of attack advances, the latter being minimized in counter-rotation.

6. The wind rotor with a vertical shaft according to the previous claims, **characterized in that** the blades (4, 4') in each case, are the result of the torsional moment generated in each infinitesimal section, so that the same is constant, having at the leading edge (6) thereof a progressive displacement of the profile towards the center of the rotor following a smooth curve and such that the upper edge of the blade is at shorter distance from the center of the shaft of the rotor than the lower edge thereof.

7. The wind rotor with a vertical shaft according to the previous claims, **characterized in that** the special configuration and arrangement of the blades (4, 4') determine a general conical frustum configuration with a curvilinear generatrix for the rotor.
